Europäisches Patentamt

European Patent Office

Office européen des brevets

(19)

(11) Veröffentlichungsnummer: **0 046 245**
**B1**

(12) ## EUROPÄISCHE PATENTSCHRIFT

(45) Veröffentlichungstag der Patentschrift:
22.05.85

(21) Anmeldenummer: **81106170.4**

(22) Anmeldetag: **06.08.81**

(51) Int. Cl.⁴: **B 66 C 1/06,** H 01 F 7/20,
H 02 K 41/025

(54) Vorrichtung zum Greifen metallischer Werkstücke.

(30) Priorität: **18.08.80 DE 3031146**

(43) Veröffentlichungstag der Anmeldung:
**24.02.82 Patentblatt 82/8**

(45) Bekanntmachung des Hinweises auf die Patenterteilung:
**22.05.85 Patentblatt 85/21**

(84) Benannte Vertragsstaaten:
**DE SE**

(56) Entgegenhaltungen:
**FR - A - 1 442 514
FR - A - 1 537 842
FR - A - 2 294 961
FR - A - 2 306 561
GB - A - 1 195 694
GB - A - 1 245 201
GB - A - 1 288 985
US - A - 2 400 869**

(73) Patentinhaber: **Siemens Aktiengesellschaft, Berlin und München Wittelsbacherplatz 2, D-8000 München 2 (DE)**

(72) Erfinder: **Haeusler, Jochen, Dr., Happurger Strasse 111, D-8500 Nürnberg-Laufamholz (DE)**
Erfinder: **Friemert, Horst, Georg-Krauss-Strasse 4, D-8520 Erlangen (DE)**
Erfinder: **Kutchukian, Remi, Burgschmietstrasse 8, D-8500 Nürnberg (DE)**

## Beschreibung

Die Erfindung bezieht sich auf eine Vorrichtung zum Greifen metallischer Werkstücke aus ferromagnetischen und/oder elektrisch gut leitenden Materialien mittels elektromagnetischer Kräfte bestehend aus einem Handhabungsgerät bzw. Montagegerät mit mindestens einem Greifarm, an dem mindestens ein Greifelement angeordnet ist.

In der Handhabungstechnik ist das Fehlen universeller Greifer ein Engpass bei der Automatisierung, insbesondere von solchen Fertigungsprozessen, bei denen kleinere und mittlere Stückzahlen bewältigt werden müssen. Neben rein mechanisch arbeitenden Greifern sind einerseits Vakuumsauggreifer und andererseits permanent- oder elektromagnetische Greifer bekannt. Während die mechanischen Greifer normalerweise an das Werkstück angepasst werden müssen und die Vakuumgreifer einschränkende Anforderungen an die Oberflächengüte des Werkstückes stellen, lassen sich die üblichen, in der Praxis erprobten Magnetgreifer nur bei ferromagnetischen Werkstücken einsetzen.

Beispielsweise aus der FR-A-1 442 514 ist eine elektromagnetische Vorrichtung bekannt, bei der Magnete unmittelbar an die Werkstückgeometrie angepasst sind. Während aber mit solchen elektromagnetischen Vorrichtungen lediglich ferromagnetische Werkstücke gegriffen werden können, sind bereits auch schon Anordnungen beschrieben worden, mit denen auch nichtferromagnetische Werkstücke greifbar sein sollen. Speziell bei der US-A- 2 400 869 sollen durch miteinander gekoppelte Wechselstromspulen in geeignet dazu angeordnete Werkstücke aus elektrisch gut leitendem Material Wirbelströme induziert werden, die bei phasenrichtiger Ansteuerung der Spulen anziehende Kräfte bewirken können. Allerdings ist die Wirksamkeit dieses Prinzips auf leitfähige Materialien vergleichsweise gering. Physikalisch liegt hier das bekannte Phänomen vor, dass ein räumlich konstantes, aber zeitlich wechselndes Feld erzeugt wird, was in der Wirkung hinsichtlich Anziehung von nichtferromagnetischen Materialien gering ist, so dass eine praxisgerechte Vorrichtung nicht realisiert werden kann.

Der Erfindung liegt daher die Aufgabe zugrunde, den Anwendungsbereich der bekannten elektromagnetischen Greifer zu erweitern und eine praxisgerechte Vorrichtung zu schaffen, mit der nicht nur Werkstücke aus ferromagnetischen Materialien wie Eisen, Kobalt, Nickel, sondern auch Werkstücke aus elektrisch gut leitendem Material wie z.B. Kupfer, Aluminium gegriffen werden können.

Die Aufgabe wird gemäss der Erfindung dadurch gelöst, dass das Greifelement aus zwei wanderfelderzeugenden Linearmotorstatoren besteht, von denen auf das Werkstück Schubkräfte ausgeübt werden derart, dass durch Überlagerung der resultierenden Schubkraft-Komponenten beider Statoren eine der Schwerkraft des Werkstückes entgegengesetzte Kraft zum Greifen ausgeübt wird. Die Statoren können zueinander im Winkel von 90° oder parallel angeordnet, aber auch unmittelbar der Werkstückgeometrie angepasst sein.

Die Verwendung von Linearmotoren für Verschiebezwecke ist zwar vom Stand der Technik bereits notorisch vorbekannt. Beispielsweise wird in der FR-A-2 294 961 speziell die Verwendung eines Linearmotors zum Verschieben ferromagnetischer Bleche beschrieben. Dabei müssen die auf das ferromagnetische Material ausgerichteten Anziehungskräfte zunächst durch ein Luftkissen kompensiert werden, um nur die Schubkräfte des linearen Wanderfeldes zum Verschieben der Bleche wirksam werden zu lassen. Daneben ist es aus der GB-A-1 245 201 auch bekannt, für Transportzwecke in vorgegebener Richtung bei Verwendung von Linearmotoren einzelne Schubkraftkomponenten zu einer resultierenden Kraft in gewünschter Richtung zu vereinigen, wozu zwei Linearmotorstatoren in der Ebene in entsprechend bestimmbarer Winkelrichtung zueinander angeordnet sind.

Während beim Stand der Technik also die Linearmotoren letztlich immer nur zur Erzeugung von Schubkräften verwendet werden, wird dagegen durch die erfindungsgemässe Lehre erstmalig durch Überlagerung einzelner Schubkraftkomponenten speziell eine der Schwerkraft eines einzelnen Werkstückes entgegengesetzte Kraft bewirkt. Diese resultierende Kraft kann somit zum Greifen von Werkstücken und damit auch zu deren Anheben und allgemeiner Handhabung ausgenutzt werden, was insbesondere bei automatisierten Fertigungsprozessen bei Einsatz von Industrierobotern ausgenutzt werden kann. Es wird somit ein überraschender Effekt mit bisher nicht erwarteter Wirkung ausgenutzt.

Insgesamt besteht also ein prinzipieller technischer Vorteil der Vorrichtung gemäss der Erfindung gegenüber dem Stand der Technik darin, dass der Greifvorgang phänomenologisch über Volumenkräfte ermöglicht wird, wobei neben der Vielseitigkeit bezüglich des zu greifenden Materials auch noch die Vielseitigkeit bezüglich der Geometrie der Werkstücke beachtlich ist.

Nachfolgend wird das Prinzip der Erfindung anhand der Zeichnung und mehrerer, in den Figuren dargestellter Ausführungsbeispiele noch näher erläutert. Es zeigen jeweils in schematischer Darstellung:

Fig. 1a bis 1c Vorrichtungen mit rechtwinklig zueinander angeordneter Linearmotorstatoren,

Fig. 2 eine Vorrichtung mit parallel zueinander angeordneter Linearmotorstatoren,

Fig. 3 eine Vorrichtung mit zwei gekrümmten Linearmotorstatoren.

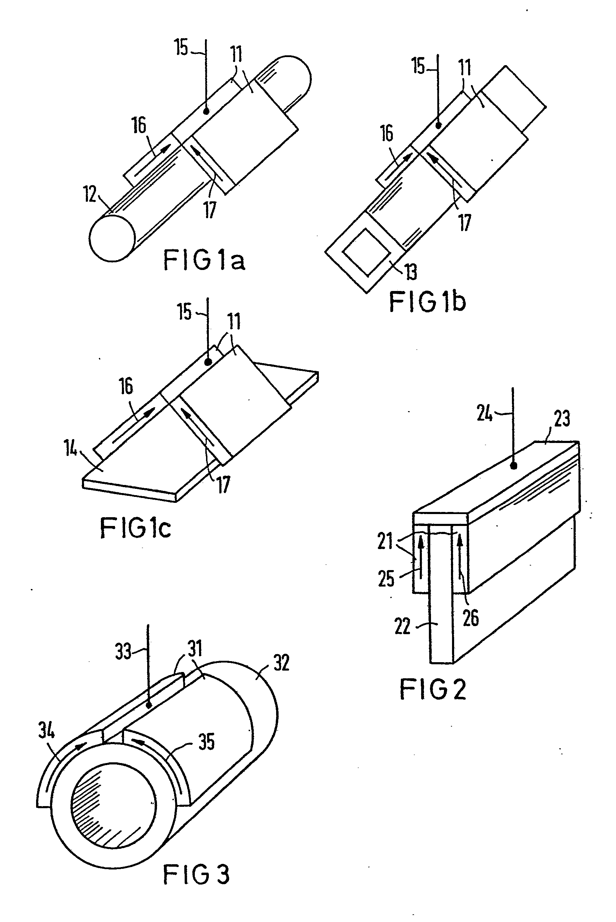

Fig. 1a zeigt das Greifen von einem zylindrischen Werkstück 12 aus ferromagnetischem Material wie Eisen, Kobalt, Nickel oder aus einem elektrisch gut leitenden Material wie Kupfer, Aluminium mittels zwei unter 90° zueinander angeordneten Linearmotorstatoren 11. Die Linearmotorstatoren 11 bilden elektromagnetische Kreise zur Erzeugung der Wanderfelder 16 und 17. Durch Überlagerung der von den Wanderfeldern 16 und 17 ausgeübten Schubkraft-Komponenten, wird eine resultierende Kraft entgegen der Schwerkraft des Werkstückes 12 erzeugt, wodurch erst die erforderlichen Greifkräfte ausgeübt werden.

Das Greifen von Werkstücken aus elektrisch gut leitendem Material erfolgt also letztlich durch Volumenkräfte aufgrund der zeitlich konstanten, aber räumlich veränderbaren Wanderfelder. Mit der Bezugsziffer 15 ist ein in der Zeichnung nicht dargestellter Greifarm angedeutet.

Fig. 1b zeigt das Greifen eines kastenförmigen Werkstücks 13 mittels zwei unter 90° zueinander angeordneten Linearmotorstatoren 11. Die Wanderfelder sind durch die Pfeile 16, 17 angedeutet. Mit Bezugsziffer 15 ist wiederum ein nicht dargestellter Greifarm angedeutet.

Fig. 1c zeigt das Greifen eines flachen recheckigen Werkstückes 14 mittels der Wanderfelder 16, 17, die in den Statoren 11 erzeugt werden. Mit 15 ist wiederum ein in der Zeichnung nicht dargestellter Greifarm angedeutet.

In allen drei Fällen ergibt die Superposition der durch die linearen Wanderfelder erzeugten Schubkraftkomponenten ein Kräfteparallelogramm mit einer Resultierenden, die der Schwerkraft des Werkstückes entgegengesetzt ist. Ist der Betrag dieser resultierenden Kraft gleich oder grösser der Schwerkraft, so kann das Werkstück angehoben werden, dass es somit handhabbar wird.

Fig. 2 zeigt das Greifen von Platinen 22 durch das Einwirken der Wanderfelder 25, 26 zwischen den parallel angeordneten Statoren 21. Mit 23 ist ein Anschlag und mit 24 ein in der Zeichnung nicht dargestellter Greifarm angedeutet. Beide Schubkraft-Komponenten wirken gegen die Schwerkraft des Werkstückes und ermöglichen bei hinreichender Grösse dessen Fixierung gegen den Anschlag 24.

Fig. 3 zeigt das Greifen zylindrischer Werkstücke 32 mit Hilfe gekrümmter Statoren 31, die Viertel eines Zylinders mit greifringförmigem Querschnitt darstellen. Auch in diesem Fall ist in den Statoren 31 die Wanderfeldrichtung 34, 35 so erzeugt, dass eine resultierende Kraft zum Greifen entsteht. Die Bezugsziffer 33 deutet einen in der Zeichnung nicht dargestellten Greifarm an. Zur Kräfteüberlagerung lassen sich die Komponenten jeweils in Teilkomponenten entsprechend Fig. 1 und Fig. 2 zerlegen.

Durch das Anpassen der Geometrie der Statoren an die Geometrie der Werkstücke wird eine Verbesserung der Greifleistung erreicht. In allen Fällen werden durch die wirksamen Volumenkräfte mit den diesbezüglichen Schubkraft-Komponenten Greifkräfte erzeugt. Damit sind Werkstücke beliebig anhebbar und auch handhabbar. Insbesondere für die Anwendung bei automatisierten Fertigungsprozessen unter Einsatz von Industrie-Robotern können erfindungsgemässe Vorrichtungen vorteilhaft angewendet werden.

## Patentansprüche

1. Vorrichtung zum Greifen metallischer Werkstücke aus ferromagnetischem und/oder elektrisch gut leitenden Materialien mittels elektromagnetischer Kräfte, bestehend aus einem Handhabungsgerät bzw. Montagegerät mit mindestens einem Greifarm, an dem mindestens ein Greifelement angeordnet ist, dadurch gekennzeichnet, dass das Greifelement aus zwei wanderfelderzeugenden Linearmotorstatoren (11, 21, 31) besteht, von denen auf das Werkstück (12, 13, 14, 22, 32) Schubkräfte ausgeübt werden, derart, dass durch Überlagerung der resultierenden Schubkraft-Komponenten beider Statoren (11, 21, 31) eine der Schwerkraft des Werkstückes (12, 13, 14, 22, 32) entgegengesetzte Kraft zum Greifen ausgeübt wird.

2. Vorrichtung nach Anspruch 1, dadurch gekennzeichnet, dass die Statoren (11) im Winkel von 90° zueinander angeordnet sind.

3. Vorrichtung nach Anspruch 1, dadurch gekennzeichnet, dass die Statoren (21) zueinander parallel angeordnet sind.

4. Vorrichtung nach Anspruch 1, dadurch gekennzeichnet, dass die Statoren (31) der Werkstückgeometrie angepasst sind.

## Claims

1. A device for gripping metallic workpieces which are made of ferro-magnetic and/or highly electrically conductive materials by means of electro-magnetic forces, consisting of a handling or assembly apparatus with at least one gripping arm on which at least one gripping element is arranged, characterised in that the gripping element consists of two linear motor stators (11, 21, 31) which produce travelling fields and by means of which thrusts are exerted on the workpiece (12, 13, 14, 22, 32) in such manner that by superposing the resulting thrust components of both stators (11, 21, 31) a gripping force is exerted which is opposed to the gravitational force on the workpiece (12, 13, 14, 22, 32).

2. A device as claimed in Claim 1, characterised in that the stators (11) are arranged at an angle of 90° to one another.

3. A device as claimed in Claim 1, characterised in that the stators (21) are arranged parallel to one another.

4. A device as claimed in Claim 1, characterised in that the stators (31) are adapted to the geometry of the workpieces.

## Revendications

1. Dispositif de préhension de pièces métalliques en matériaux ferromagnétiques et/ou bons conducteurs de l'électricité, à l'aide de forces électromagnétiques constitué d'un appareil de manipulation ou d'un appareil de montage ayant au moins un bras de préhension sur lequel est disposé au moins un élément de préhension, caractérisé en ce que l'élément de préhension est constitué de deux stators de moteurs linéaires (11, 21, 31) qui produisent des champs progressifs et par lesquels des forces de poussée sont exercées sur la pièce (12, 13, 14, 22, 32) de manière que par superposition des composantes résultantes de la force de poussée, des deux stators (11, 21, 31) une force opposée à la force de gravité de la pièce (12, 13, 14, 22, 32) soit exercée pour la préhension.

2. Dispositif suivant la revendication 1, caractérisé en ce que les stators (11) sont disposés entre eux en faisant un angle de 90°.

3. Dispositif suivant la revendication 1, caractérisé en ce que les stators (21) sont disposés parallèlement entre eux.

4. Dispositif suivant la revendication 1, caractérisé en ce que les stators (31) sont adaptés à la géométrie de la pièce.

FIG 1a

FIG 1b

FIG 1c

FIG 2

FIG 3